# EUROPEAN PATENT SPECIFICATION

(11) **EP 0 984 566 B1**
(45) Date of publication and mention of the grant of the patent: **08.06.2005**
(21) Application number: 98905760.9
(22) Date of filing: 04.03.1998
(51) Int. Cl.: H04B 7/155, H04B 7/185

(54) **PORTABLE TERMINAL FOR SATELLITE COMMUNICATION**
TRAGBARES ENDGERÄT FÜR SATELLITEN KOMMUNIKATION
TERMINAL PORTATIF DE COMMUNICATION PAR SATELLITE

(43) Date of publication of application: 08.03.2000
(73) Proprietor: MITSUBISHI DENKI KABUSHIKI KAISHA, Tokyo 100-8310 (JP)
(72) Inventor: HIROO, Akira, Mitsubishi Denki K.K., Tokyo 100-8310 (JP)
(74) Representative: Popp, Eugen, Dr.
(86) International application number: PCT/JP1998/000894
(87) International publication number: WO 1999/045658

(56) References cited:
- EP-A- 0 425 763
- JP-A- 61 234 631
- US-A- 5 365 450
- US-A- 5 446 465
- US-A- 5 574 660
- US-A- 5 678 174

## Description

### Technical Field

The present invention relates to a portable terminal for satellite communication by which a circular orbit satellite capable of performing a communication with the highest quality at the current position of the portable terminal can be selected among a plurality of circular orbit satellites and an antenna beam is turned to the circular orbit satellite so as to execute the communication.

### Background Art

Recently, the development of Global Mobile Personal Communication via Satellite(GMPCS) which utilize circular orbit satellites has been proposed so as to realize an global communication through compact and portable telephone sets. One of the representative systems thereof is an iridium system (refer to a non-geosynchronuous earth orbit satellite communication in the world described in the high technological book series 10, published by the radio signal newspaper office on May 10, 1994) which has been proposed by the Motorola Corporation in USA. This system comprises 11 sets of satellites arranged on each of six polar orbital planes at an altitude of about 780 km so that the total of 66 sets of satellites are arranged, and the system is constituted by linking the satellites located in the front and back parts and the right and left sides in the same advancing direction together by a communication between the satellites, which enables a global communication to be realized.

This system serves as a digital personal communication system capable of transmitting and receiving audio and paging data, facsimile and position survey data, etc., by employing a digital personal telephone set as a portable terminal from any place of the world. According to this system, the antenna beam of the telephone set is turned to the direction of the satellite and the telephone number of the other party is dialed so that a user can talk with mate all over the world.

However, in case the user tries to turn the antenna beam of his terminal to the circular orbit satellites located at an angle not smaller than a prescribed elevation angle among a plurality of circular orbit satellites which revolve on cyclical revolution orbits, he often has an intention to capture the circular orbit satellite within the beam by inclining the antenna with no positive assurance. Therefore, if there exists an error between the position of the circular orbit satellite and the direction to which the antenna is turned, there has been encountered a problem that it takes much time to correct the error and to obtain a suitable communication state with high quality.

US 5,678,174 attempts to solve the problem of obtaining a high quality signal state in a portable terminal in a satellite communication system. This document discusses a method, whereby the relative position of the portable terminal to a satellite is determined by communication to the satellite, and a future time is calculated when communication should be possible. No discussion is made of using the terminal's position and the current time for locating a direction in which to aim the antenna to facilitate radio communication.

In order to overcome such a problem, the present invention is proposed, and it is an object of the present invention to obtain a portable terminal for satellite communication by which the operator of the terminal can recognize the direction of a circular orbit satellite capable of carrying out a high quality satellite communication at the present position of the operator.

### Disclosure of the Invention

The present invention concerns a portable terminal for satellite communication by which a communication is performed through a circular orbit satellite, the portable terminal for satellite communication comprising: an information input means for inputting the information of the position and time of the terminal; a satellite orbit calculating means for calculating the positions of the circular orbit satellites based on the time inputted by the information input means; a satellite selecting means for selecting circular orbit satellites located at an angle not smaller than a prescribed elevation angle based on the position of the terminal which is inputted by the information input means and the positions of the cyclically 2 revolving satellites which are calculated by the satellite orbit calculating means; and a display means for displaying the positions of the circular orbit satellites which are selected by the satellite selecting means. Thus, since an optimum communication state can be maintained, the direction of an antenna beam can be readily grasped.

Further, since the display means in the present invention maps out the positions of the selected circular orbit satellites and displays their images, the optimum communication state can be ensured, the direction of the antenna beam can be more readily grasped.

Still further, since the satellite selecting means in the present invention determines a prescribed circular orbit satellite among the selected circular orbit satellites and enables the display means to display the determined circular orbit satellite in a manner different from the display manners of other circular orbit satellites, a communication line with good quality can be rapidly maintained.

In addition, since the present invention further comprises an direction detecting means for detecting an azimuth by using the position of the terminal as a reference, the direction to which the antenna beam is turned can be more easily detected.

Besides, since the information input means in the present invention can sample the information of the position and time of the terminal based on radio signal received from the circular orbit satellites, an operator of the terminal is not forced to carry out a troublesome operation and therefore, a terminal excellent in convenience to handle can be provided.

### Brief Description of the Drawings

Figure 1 is a block diagram showing the configuration of a portable terminal for satellite communication according to an embodiment of the present invention;
Figure 2 is a diagrammatic view showing the display manner of a satellite position display device according to the embodiment; and
Figure 3 is a view showing the arrangement of orbits of circular orbit satellites.

### Best Mode for Carrying Out the Invention

The present invention will be described by using the accompanying drawings in order to explain the invention in more detail.

### Embodiment 1

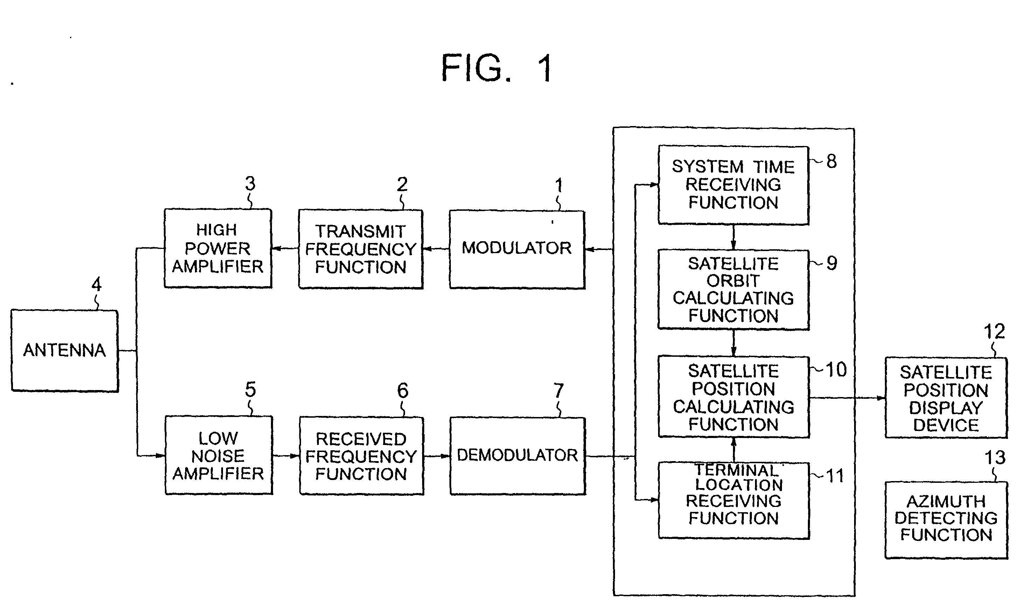

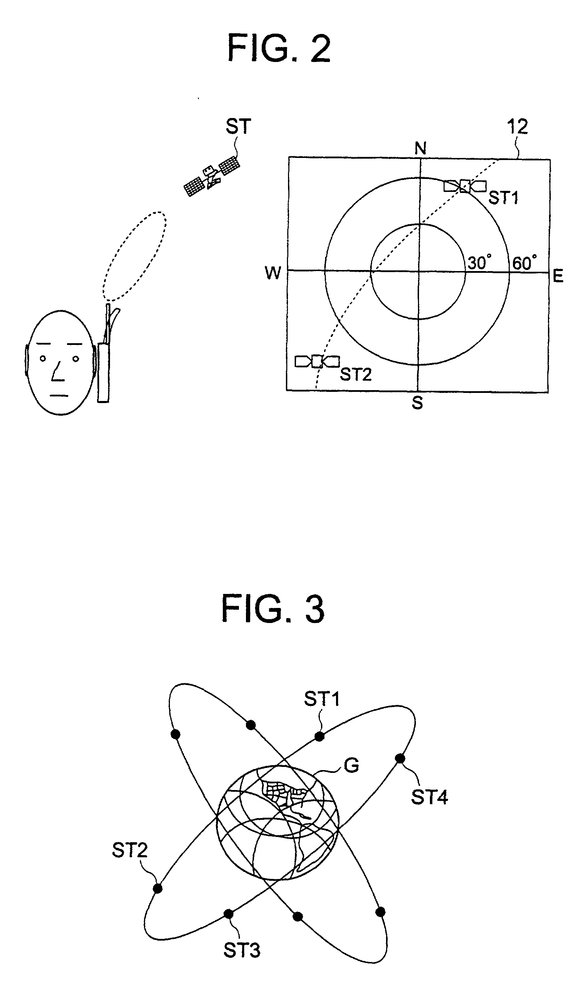

Figure 1 is a block diagram for explaining the configuration of a portable terminal for satellite communication according to this embodiment. This terminal is designed to select one circular orbit satellite located at an angle of elevation optimum for itself among a plurality of circular orbit satellites STs shown in a satellite constellation view of Figure 3 and to transmit to and receive from other terminal or an earth station audio data, data and message.

In Figure 1, reference numeral 1 designates a modulator to modulate a baseband digital signal such as inputted audio data, data, message or the like to an IF signal, 2 designates a transmit frequency converter to convert the IF signal as the output of the modulator into an RF signal, 3 designates a high power amplifier for amplifying the RF signal, 4 indicates an antenna for transmitting and receiving the amplified RF signal, 5 indicates a low noise amplifier for amplifying a weak RF signal which is received by the antenna 4, 6 designates a received frequency converter for converting the amplified received RF signal into an IF signal, and 7 designates a demodulator to demodulate the IF signal as the output of the received frequency converter to a baseband digital signal such as the audio data, data, message and so on.

Further, reference numeral 8 designates a system time receiving function (information input means) for taking out the absolute time of a system from the 4 output of the demodulator, 9 designates a satellite orbit calculating function for calculating the absolute positions of circular orbit satellites moving on respective orbits at present based on the taken out system time, 10 designates a satellite position calculating function (satellite selecting means) which calculates a terminal location taken out by a terminal location receiving function (information input means) and the positions of the circular orbit satellites relative to the terminal based on the absolute positions of the circular orbit satellites calculated by the satellite orbit calculating function 9 and the output of the demodulator and selects a circular orbit satellite located at an elevation angle optimum for itself, 12 designates a satellite position display device (display means) for displaying the results calculated by the satellite position calculating function as shown in Figure 2 and 13 designates an azimuth detecting function composed of a magnetic compass for surveying an azimuth by utilizing the operator of the terminal as a reference.

Now, the operation of this embodiment will be described hereinafter.

The baseband digital signal is modulated to the IF signal by the modulator 1 and the IF signal is inputted to the transmit frequency converter 2. Then, the IF signal is converted into the RF signal of prescribed line frequency by the transmit frequency converter 2 and the RF signal is inputted to the high power amplifier 3. The high power amplifier 3 amplifies the RF signal. The amplified RF signal is transmitted to the circular orbit satellites STs by the antenna 4.

On the other hand, radio signal from the circular orbit satellites are received by the antenna 4, and the received radio signal is inputted to the low noise amplifier 5. The output amplified by the low noise amplifier 5 is converted into an IF signal or a baseband frequency signal by the received frequency converter 6. Then, the output of the received frequency converter 6 is inputted to the demodulator 7 and the output is demodulated to a baseband digital signal. The baseband digital signal is inputted to the system time receiving function 8 and a terminal location receiving function 11.

As a result, the system time receiving function 8 takes out or fetches the absolute time of the system from the inputted baseband digital signal. When the absolute time of the system becomes clear, the absolute positions of the satellites at present can be calculated and obtained in the satellite orbit calculating function 9. Since the circular orbit satellites (for instance, ICO) cyclically revolve on cyclical revolution orbits at an altitude of approximately 10,000 km on the earth for each cycle of 5 to 6 hours, the absolute positions of the circular orbit satellites can be got by knowing the absolute time of the system.

Then, the positions of the respectively circular orbit satellites relative to the location of the terminal are calculated by the satellite position calculating function 10 based on the absolute position of the terminal on the earth which was sampled or extracted by the terminal location receiving function 11 and the absolute positions of the circular orbit satellites obtained as above. Then, the circular orbit satellites ST1 and ST2 located at an angle not smaller than a prescribed elevation angle relative to the absolute position of the terminal are extracted or sampled, so that their images as well as their azimuths and elevation angles are displayed on the satellite position display device 12 in such a display manner as shown in Figure 2.

In case the operator of the terminal who observes the display of their images carries out a communication with other terminals or the earth station through the circular orbit satellite ST1, he determines the north by the magnetic compass by using a terminal location as a reference in order to turn the antenna beam of the terminal substantially northward and turns the antenna beam to that direction. Consequently, the antenna beam of the terminal can be precisely turned to the circular orbit satellite to perform an effective communication.

### Embodiment 2

According to the embodiment 1, although the absolute positions of the circular orbit satellites and the absolute location of the terminal are sampled or extracted from the radio signal received from the circular orbit satellites, needless to say, the absolute time of the system may be inputted to the system time receiving function 8 based on time information and positional information (GPS information) which are manually inputted by the location of the terminal, the absolute location of the terminal may be calculated by the terminal location receiving function 11 and the result may be inputted respectively to the satellite orbit calculating function 9 and the satellite position calculating function 10. As a result, even when the communication sometimes stops due to the unsatisfactory state of the radio signal , the position of the circular orbit satellite with which the terminal communicates can be calculated.

### Embodiment 3

When the respectively circular orbit satellites whose positions are calculated are displayed on the satellite position display device 3, the satellite position calculating function 10 specifies the circular orbit satellite which is most suitable for communicating with at present among the selected circular orbit satellites and enables the circular orbit satellite to be displayed in a manner different from the display manners of other circular orbit satellites. For example, the image of the circular orbit satellite which is in a state of communication at present is flickered. In this connection, the circular orbit satellite whose display manner is different from those of other circular orbit satellites is a circular orbit satellite which is improved from the viewpoints of its communication quality and reliability. For instance, a satellite with 7 high receiving level is selected.

However, a circular orbit satellite having the high receiving level but a low elevation angle may possibly deviate from the field of vision in the course of its cyclical revolution. Accordingly, a circular orbit satellite located at a high elevation angle with few blinds or obstructions such as mountains or buildings or the like is most suitable for an object to be selected.

### Embodiment 4

In the above described embodiment 1, although the azimuth detecting function designates the magnetic compass which is carried by the operator of the terminal, it is to be recognized that the terminal may be provided with a function for detecting the azimuth of an antenna beam.

### Industrial Applicability

The direction of a circular orbit satellite capable of performing a high quality satellite communication can be recognized by a terminal at the present location of the operator of the terminal.

## Claims

1. A portable terminal for satellite communication by which a communication is performed through a circular orbit satellite, said portable terminal for satellite ST communication **characterised by**:
an information input means (8, 11) for inputting the information of the location and time of said terminal;
a satellite orbit calculating means (10) for calculating the positions of said circular orbit satellites based on the time inputted by the information input means (8, 11);
a satellite selecting means for selecting circular orbit satellites located at an angle not smaller than a prescribed elevation angle based on the position of the terminal which is inputted by the information input means (8, 11) and the positions of said circular orbit satellites which are calculated by said satellite orbit calculating means (10); and
a display means (12) for displaying the positions of the circular orbit satellites which are selected by the satellite selecting means.

2. A portable terminal for satellite communication according to claim 1, wherein said display means (12) maps out the positions of the selected circular orbit satellites and displays their images.

3. A portable terminal for satellite communication according to claim 1, wherein said satellite selecting means determines a prescribed circular orbit satellite among the selected circular orbit satellites and enables the display means (12) to display the determined circular orbit satellite in a manner different from the display manners of other circular orbit satellites.

4. A portable terminal for satellite communication according to claim 1, further comprising an azimuth detecting means (13) for detecting an azimuth by using the position of said terminal as a reference.

5. A portable terminal for satellite communication according to any one of claims 1 to 4, wherein said information input means (8, 11) can sample the information of the location and time of the terminal based on radio signal received from the circular orbit satellites.

## Patentansprüche

1. Tragbares Endgerät für Satelliten-Kommunikation, mit dem eine Kommunikation durch einen Kreisorbitsatelliten erfolgt, wobei das tragbare Endgerät für Satelliten-ST-Kommunikation **gekennzeichnet ist durch**:
eine Informationseingabeeinrichtung (8, 11) zum Eingeben der Information von Ort und Zeit des Endgeräts;
eine Satellitenorbit-Berechnungseinrichtung (10) zum Berechnen der Positionen der Kreisorbitsatelliten, basierend auf der **durch** die Informationseingabeeinrichtung (8, 11) eingegebenen Zeit;
eine Satellitenwähleinrichtung zum Wählen von Kreisorbitsatelliten, die unter einem Winkel positioniert sind, der nicht kleiner als ein vorbestimmter Höhenwinkel ist, basierend auf der **durch** die Informationseingabeeinrichtung (8, 11) eingegebenen Position des Endgeräts und der **durch** die Satellitenorbit-Berechnungseinrichtung (10) berechneten Positionen der Kreisorbitsatelliten; und
eine Anzeigeeinrichtung (12) zum Anzeigen der Positionen der von der Satellitenwähleinrichtung gewählten Kreisorbitsatelliten.

2. Tragbares Endgerät für Satelliten-Kommunikation nach Anspruch 1, wobei die Anzeigeeinrichtung (12) die Positionen der gewählten Kreisorbitsatelliten abbildet und ihre Abbildungen anzeigt.

3. Tragbares Endgerät für Satelliten-Kommunikation nach Anspruch 1, wobei die Satellitenwähleinrichtung unter den gewählten Kreisorbitsatelliten einen vorbestimmten Kreisorbitsatelliten bestimmt und die Anzeigeeinrichtung (12) aktiviert, den bestimmten Kreisorbitsatelliten auf eine Weise anzuzeigen, die von den Anzeigeweisen anderer Kreisorbitsatelliten verschieden ist.

4. Tragbares Endgerät für Satelliten-Kommunikation nach Anspruch 1, das ferner aufweist: eine Azimutwinkeldetektiereinrichtung (13) zum Detektieren eines Azimutwinkels unter Nutzung der Position des Endgeräts als eine Referenz.

5. Tragbares Endgerät für Satelliten-Kommunikation nach einem der Ansprüche 1 bis 4, wobei die Informationseingabeeinrichtung (8, 11) die Information von Ort und Zeit des Endgeräts, basierend auf einem von den Kreisorbitsatelliten empfangenen Funksignals, abtasten kann.

## Revendications

1. Terminal portable pour communication par satellite, par lequel une communication est réalisée via un satellite en orbite circulaire, ledit terminal portable pour communication par satellite (ST) étant **caractérisé par** :
un moyen d'entrée d'informations (8, 11) pour entrer les informations de l'emplacement et de l'heure dudit terminal ;
un moyen de calcul d'orbite de satellite (10) pour calculer les positions desdits satellites en orbite circulaire en fonction de l'heure entrée par le moyen d'entrée d'informations (8, 11) ;
un moyen de sélection de satellite pour sélectionner des satellites en orbite circulaire situés à un angle non inférieur à un angle d'élévation prescrit en fonction sur la position du terminal qui est entrée par le moyen d'entrée d'informations (8, 11) et les positions desdits satellites en orbite circulaire qui sont calculées par ledit moyen de calcul d'orbite de satellite (10) ; et
un moyen d'affichage (12) pour afficher les positions des satellites en orbite circulaire qui sont sélectionnées par le moyen de sélection de satellite.

2. Terminal portable pour communication par satellite selon la revendication 1, dans lequel ledit moyen d'affichage (12) cartographie les positions des satellites en orbite circulaire et affiche leurs images.

3. Terminal portable pour communication par satellite selon la revendication 1, dans lequel ledit moyen de sélection de satellite détermine un satellite en orbite circulaire prescrit parmi les satellites en orbite circulaire et permet au moyen d'affichage (12) d'afficher le satellite en orbite circulaire déterminé d'une manière différente des manières d'afficher d'autres satellites en orbite circulaire.

4. Terminal portable pour communication par satellite selon la revendication 1, comprenant en outre un moyen de détection d'azimut (13) pour détecter un azimut en utilisant la position dudit terminal comme référence.

5. Terminal portable pour communication par satellite selon l'une quelconque des revendications 1 à 4, dans lequel ledit moyen d'entrée d'informations (8, 11) peut échantillonner les informations sur l'emplacement et l'heure du terminal en fonction du signal radio reçu des satellites en orbite circulaire.
